# EUROPEAN PATENT APPLICATION

(11) **EP 4 851 856 A1**
(43) Date of publication of application: **09.12.2026**
(21) Application number: 24925448.3
(22) Date of filing: 07.08.2024
(51) Int. Cl.: G06N 3/008

(54) **INFORMATION PROCESSING METHOD FOR AGENT, AND RELATED DEVICE**

(30) Priority: 23.02.2024 CN 202410204964; 22.05.2024 CN 202410660467
(71) Applicant: Huawei Cloud Computing Technologies Co., Ltd., Gui'an New District, Guizhou 550025 (CN)
(72) Inventor: WANG, Feng, Guiyang, Guizhou 550025 (CN); WANG, Jiezhang, Guiyang, Guizhou 550025 (CN); MAO, Sitong, Guiyang, Guizhou 550025 (CN); ZHOU, Shunbo, Guiyang, Guizhou 550025 (CN); DONG, Junyi, Guiyang, Guizhou 550025 (CN); XUE, Kaiwen, Guiyang, Guizhou 550025 (CN); RUAN, Yifan, Guiyang, Guizhou 550025 (CN)
(74) Representative: Huawei European IPR
(86) International application number: PCT/CN2024/110316
(87) International publication number: WO 2025/175706

(57) **Abstract**

This application provides an information processing method for an agent and a related device, to simplify a development process of an embodied agent and improve development efficiency. The method includes: displaying a session interface including an input field; obtaining a first instruction in response to a first input operation on the input field, where a language of the first instruction is a natural language; and displaying, on the session interface, first response information returned by a first agent, where the first response information is for the first instruction, and the first agent is determined based on the first instruction.

## Description

This application claims priorities to Chinese Patent Application No. 202410204964.1, filed with the China National Intellectual Property Administration on February 23, 2024, and entitled "DEVELOPMENT AND OPERATION MANAGEMENT SYSTEM FOR EMBODIED AGENT BASED ON MULTI-AGENT INTERACTION", and to Chinese Patent Application No. 202410660467.2, filed with the China National Intellectual Property Administration on May 22, 2024, and entitled "INFORMATION PROCESSING METHOD FOR AGENT AND RELATED DEVICE", both of which are incorporated herein by reference in their entireties.

### TECHNICAL FIELD

This application relates to the field of cloud computing, and in particular, to an information processing method for an agent and a related device.

### BACKGROUND

With the development of artificial intelligence (artificial intelligence, AI), various industries have been influenced by AI agents (agent). The agent may be understood as an intelligent agent capable of completing tasks on behalf of a user. The agent includes an embodied agent, which is an agent that interacts with or provides feedback to a physical entity, including a virtual object, a digital entity, a robot, and the like, and the embodied agent is represented graphically.

In conventional technical solutions, web (web) services require a user to navigate between a plurality of pages to complete different requirements and tasks, resulting in complex service use. In addition, in existing development solutions of embodied agents, a plurality of modules need to cooperate with each other. If development is performed based on the foregoing conventional service forms, an overall process is complex and lengthy, leading to low development efficiency.

### SUMMARY

This application provides an information processing method for an agent and a related device, to simplify a development process of an embodied agent and improve development efficiency.

According to a first aspect, this application provides an information processing method for an agent, including:

The information processing method for an agent provided in this application is applied to a cloud platform, the cloud platform runs an agent system, and the agent system includes a plurality of agents. The plurality of agents include at least one of a real embodied agent, a virtual embodied agent, and an AI agent. The real embodied agent corresponds to a physical entity in a physical environment, and the virtual embodied agent corresponds to a virtual entity in a virtual environment. Both the real embodied agent and the virtual embodied agent can interact with or act on the physical entity, thereby affecting the physical environment. The AI agent is configured to: manage another agent in the agent system, or provide an online service.

The cloud platform displays a session interface via a computer device, and the computer device logs in to an account registered by a user on the cloud platform, and provides an agent service; and the session interface includes an input field. The cloud platform obtains, in response to an operation on the input field, an instruction entered by a user. For example, the cloud platform obtains a first instruction in response to a first input operation on the input field, where a language of the first instruction is a natural language (natural language). The first input operation has a plurality of possible implementations, and may be a touch operation, or may be input via an input device. In addition, the first input operation may be another manner that can implement an input, for example, a voice input. This is not specifically limited herein. The input device includes a device like a keyboard, a mouse, or a stylus. This is not specifically limited herein. In addition, the natural language in this application is a language used for human communication, in forms including a text and a voice. A language of the natural language is not limited in this application either. The cloud platform obtains the first instruction, and displays, on the session interface, first response information returned by a first agent, where the first response information is for the first instruction, that is, the first response information is a response to the first instruction. A language of the first response information is a natural language or a code language. This is not specifically limited herein. The first agent is determined based on the first instruction, and the plurality of agents included in the agent system include the first agent. Further, the first instruction includes an execution body and/or an event. The execution body indicates an object that executes the first instruction, or the execution body is a subject of the first instruction. The event indicates a purpose of the first instruction, or an intent of the first instruction, and represents a thing to be completed or implemented by the first instruction.

In this application, interaction with the first agent is performed by using a natural language, to simplify a complex development or management process. Further, in a solution in which the first agent includes an embodied agent or the first agent manages the embodied agent, complexity of developing the embodied agent is reduced, and development efficiency is improved. In some optional implementations of the first aspect, the first agent is a real embodied agent, that is, the first agent corresponds to a physical entity in a physical environment. When the execution body included in the first instruction is the first agent, and the event included in the first instruction matches a function of the first agent, it indicates that the first agent can complete the event indicated by the first instruction. In this case, the first response information includes at least one of a status of the first agent and an event status corresponding to the first instruction. The status of the first agent includes information that can reflect a current status of the first agent, such as whether the first agent accepts the first instruction, whether the first agent currently executes a task, and whether the first agent is faulty/is offline/has insufficient power. Specific content of the event status corresponding to the first instruction varies with the event included in the first instruction. In general, the specific content may include event-related information such as a completion degree of an event at a current moment, an event phase at the current moment, estimated time of completing the event, and whether an obstacle is encountered during event processing. A language of the first response information is a natural language.

In this application, when the first agent is the real embodied agent, the first instruction indicates the first agent, and the first agent can complete the event included in the first instruction, the first response information has a plurality of possible implementations, thereby enriching implementations of the technical solutions in this application. In addition, a status of the first agent and/or a status of the event included in the first instruction may be learned of based on the first response information, and whether to adjust the agent that executes the first instruction may be determined accordingly, thereby accelerating completion of the event included in the first instruction, and improving event completion efficiency.

In some optional implementations of the first aspect, the first agent is a real embodied agent, and corresponds to a physical entity in a physical environment. When the execution body included in the first instruction is the first agent, and the event included in the first instruction does not match a function of the first agent, it indicates that the first agent cannot complete the event included in the first instruction. In this case, the first agent invokes another agent to complete the event included in the first instruction. In other words, the first response information includes invocation information for an embodied agent, where a second agent is a real embodied agent, and a function of the second agent matches the event included in the first instruction, or a second agent is a first AI agent, and the first AI agent is configured to manage the agent system. The invocation information for the second agent is to invoke the second agent to implement the event included in the first instruction, or to reply to the first instruction. In addition, a language of the first response information may be a natural language, that is, a language of the invocation information for the second agent may be a natural language.

In this application, in a solution in which the first agent indicated by the first instruction cannot complete the event included in the first instruction, the first response information returned by the first agent is actually the invocation information for the second agent, and the second agent implements the event included in the first instruction. In other words, in this application, agents may also invoke each other by using a natural language, thereby further improving development efficiency of the agents and also improving intelligence of the agents.

In some optional implementations of the first aspect, in a solution in which the first response information includes the invocation information for the second agent, after displaying the first response message on the session interface, the cloud platform further displays, on the session interface, second response information returned by the second agent, where the second response information is for the first instruction. In other words, the second response information is actually a reply made by the second agent to content of the first instruction. In addition, the second response information varies with the second agent. Optionally, in a solution in which the function of the second agent matches the event included in the first instruction, the second response information includes a status of the second agent and/or an event status corresponding to the first instruction. In a solution in which the second agent is the first AI agent, the second response information includes invocation information for an agent that matches the event included in the first instruction, or information indicating that execution cannot be performed. The information indicating that execution cannot be performed indicates that the agent system cannot execute the event included in the first instruction. In general, in a solution in which the second agent is the first AI agent, the first AI agent sends the invocation information to another agent, to indicate the agent to implement the event included in the first instruction, or the first AI agent replies with the information indicating that execution cannot be performed.

In this application, in a solution in which the first agent indicated by the first instruction cannot complete the event included in the first instruction, after the first agent replies with the first response information, the second agent may further reply with the second response information. The second agent and the second response information each have a plurality of possible implementations, thereby enriching implementations and application scenarios of the technical solutions of this application, and improving flexibility and practicality of the technical solutions of this application.

In some optional implementations of the first aspect, in a solution in which the first instruction does not include the execution body, the first agent is the first AI agent by default, and the first AI agent may also be referred to as a management agent, and is configured to manage the agent system. In this case, the first response information includes invocation information for a third agent, or information indicating that execution cannot be performed. A function of the third agent matches the event included in the first instruction. The invocation information for the third agent is to invoke the third agent to implement the event included in the first instruction. The information indicating that execution cannot be performed indicates that the agent system cannot execute the event included in the first instruction.

In this application, in a solution in which the first instruction does not include the execution body, the first AI agent is managed to reply with the first response information by default. In other words, even if the first instruction entered by the user is incomplete, a reply can still be obtained, thereby simplifying an operation of the user and further simplifying development of the agent. In addition, the first AI agent may invoke another agent to complete the event included in the first instruction, or reply with the information indicating that execution cannot be performed, so that the user learns of a progress of the event included in the first instruction, thereby improving practicality of the technical solutions of this application.

In some optional implementations of the first aspect, in a solution in which the first instruction includes the execution body but does not include the event, the first agent is an agent indicated by the execution body. The first response information includes prompt information, and the prompt information is used to remind the user to input an event, or is used to display a default function of the first agent, or is used to display a latest operation of the first agent. Alternatively, the first response information is used to trigger a default operation of the first agent, for example, trigger a default function of the first agent, or trigger a latest operation of the first agent. Specific content of the default operation may be set based on an actual application requirement. This is not specifically limited herein.

In some optional implementations of the first aspect, the cloud platform obtains a second instruction in response to a second input operation on the input field. The second instruction instructs to display a data stream of a target event, that is, an event included in the second instruction is displaying the data stream of the target event. The target event is an event that has been executed or is being executed by the agent system, a language of the second instruction is a natural language, and the second input operation is similar to the first input operation and has a plurality of possible implementations. Details are not described herein again. After obtaining the second instruction, the cloud platform displays the data stream of the target event.

In this application, the data stream of the target event can vividly display a status of the target event, so that the user intuitively perceives the status of the target event, thereby improving user experience.

In some optional implementations of the first aspect, before displaying the data stream of the target event, the cloud platform displays third response information on the session interface, where the third response information is for the second instruction, that is, the third response information is a response to the second instruction. In this case, the computer device may display the data stream of the target event in response to a touch operation on the third response information. The third response information may be a medium that indicates the data stream of the target event, such as a link or a file. The user performs a touch operation on the medium, so that the data stream of the target event is displayed.

In this application, after obtaining the second instruction, the cloud platform can not only directly display the data stream of the target event, but also display the data stream of the target event by displaying the third response information on the session interface, thereby enriching implementations and application scenarios of the technical solutions in this application, and improving flexibility of the technical solutions.

In some optional implementations of the first aspect, a display location of the data stream of the target event has a plurality of possible implementations, which may be displayed on the session interface, or may be displayed on an interface other than the session interface. This is not specifically limited herein. Flexible configuration may be performed based on an actual application, thereby further improving flexibility of the technical solutions of this application.

In some optional implementations of the first aspect, the data stream of the target event has a plurality of possible implementations, including a real-time data stream of the target event, a historical data stream of the target event, a first-person perspective data stream of the target event, or a third-person perspective data stream of the target event. This is not specifically limited herein. The first-person perspective is a perspective of an agent that executes the target event, and the third-person perspective may also be referred to as a God's eye view or a bystander perspective, that is, a perspective of the agent system.

In this application, a type of the data stream of the target perspective has a plurality of possible implementations, and may be determined based on content indicated by the second instruction or may be set by default, thereby further improving flexibility of the technical solutions of this application.

In some optional implementations of the first aspect, the cloud platform obtains a third instruction in response to a third input operation on the input field. The third instruction instructs to construct a target simulation environment, that is, an event included in the third instruction is constructing the target simulation environment. In addition, a language of the third instruction is a natural language. The computer device displays the target simulation environment on a simulation interface based on the third instruction.

In this application, the computer device may further display a simulation environment. Based on the simulation environment, simulation or emulation of a physical entity can be implemented, and embodied agents can be developed and detected.

In some optional implementations of the first aspect, the cloud platform obtains a fourth instruction in response to a fourth input operation on the input field. The fourth instruction instructs to generate data of a target type, that is, an event included in the fourth instruction is generating the data of the target type. In addition, a language of the fourth instruction is a natural language. The target type has a plurality of possible implementations, including radar (lidar) data, depth (depth) data, red-yellow-blue color mode (RGB) data, trajectory data, and the like. This is not specifically limited herein. The cloud platform displays fourth response information on the session interface based on the fourth instruction, where the fourth response information includes and indicates the data of the target type. Further, the fourth response information may include the data of the target type, or include a medium indicating the data of the target type. In the latter solution, the computer device displays the data of the target type in response to a touch operation on the medium.

In this application, a type of data generated in the simulation environment may be further indicated. The type of the data and the fourth response information each have a plurality of possible implementations, thereby enriching implementations of the technical solutions in this application.

In some optional implementations of the first aspect, the cloud platform obtains a fifth instruction in response to a fifth input operation on the input field, where a language of the fifth instruction is a natural language, and an event included in the fifth instruction matches a function of a virtual embodied agent. The cloud platform displays fourth response information returned by the virtual embodied agent on the session interface, where the fourth response information includes a status of the virtual embodied agent and/or an event status corresponding to the fourth instruction.

In this application, the virtual embodied agent may be further invoked to complete the instruction, so as to change a virtual environment, and also simulate a change in a real physical environment, providing a reference for applying a corresponding physical entity in the physical environment, that is, providing simulation data, thereby improving practicality of the technical solutions of this application.

In some optional implementations of the first aspect, in a solution in which an execution body included in the fifth instruction is not the virtual embodied agent shown in the previous implementation, before displaying the fourth response information, the cloud platform displays response information returned by the execution body included in the fifth instruction, where the response information includes invocation information for the virtual embodied agent, indicating the virtual embodied agent to reply with the fifth instruction.

In some optional implementations of the first aspect, the cloud platform obtains a sixth instruction in response to a sixth input operation on the input field. The sixth instruction instructs to generate skill code of a fourth agent. That is, an event included in the sixth instruction is generating the skill code of the fourth agent. The skill code is used to describe a function of the fourth agent, and may further describe working logic of the fourth agent. In addition, a language of the fourth instruction is a natural language. The cloud platform displays the skill code of the fourth agent on a code interface based on the sixth instruction.

In this application, the computer device may further generate and display the skill code of the agent, thereby providing a basis for code detection and improving implementability of the technical solutions.

In some optional implementations of the first aspect, the cloud platform may further test the skill code of the fourth agent, and display a test result of the code, so that the user determines, based on the test result, whether the code can be accurately executed, thereby improving development accuracy of the agent.

According to a second aspect, this application provides an information processing apparatus for an agent, which can implement the method according to any one of the first aspect or the possible implementations of the first aspect. The apparatus includes a corresponding unit or module configured to perform the method. The unit or module included in the apparatus can be implemented by software and/or hardware.

According to a third aspect, this application provides a computer device, including a processor and a memory. The processor stores instructions, and when the instructions stored in the memory are run on the processor, the method according to any one of the first aspect or the possible implementations of the first aspect is implemented.

According to a fourth aspect, this application provides a computer-readable storage medium. The computer-readable storage medium stores instructions, and when the instructions are run on a processor, the method according to any one of the first aspect or the possible implementations of the first aspect is implemented.

According to a fifth aspect, this application provides a computer program product. When the computer program product is executed on a processor, the method according to any one of the first aspect or the possible implementations of the first aspect is implemented.

Beneficial effects shown in any one of the second aspect to the fifth aspect are similar to those in any one of the first aspect or the possible implementations of the first aspect. Details are not described herein again.

### BRIEF DESCRIPTION OF DRAWINGS

FIG. 1 is a diagram of a system architecture according to an embodiment of this application;
FIG. 2 is a schematic flowchart of an information processing method for an agent according to an embodiment of this application;
FIG. 3 is a diagram of a session interface according to an embodiment of this application;
FIG. 4 is a diagram of an input field according to an embodiment of this application;
FIG. 5A and FIG. 5B are another diagram of an input field according to an embodiment of this application;
FIG. 6A and FIG. 6B are another diagram of a session interface according to an embodiment of this application;
FIG. 7A and FIG. 7B are another diagram of a session interface according to an embodiment of this application;
FIG. 8 is a diagram of an interface according to an embodiment of this application;
FIG. 9 is a diagram of another interface according to an embodiment of this application;
FIG. 10 is another diagram of a session interface according to an embodiment of this application;
FIG. 11 is a diagram of a simulation interface according to an embodiment of this application;
FIG. 12 is a diagram of a code interface according to an embodiment of this application;
FIG. 13 is a diagram of another interface according to an embodiment of this application;
FIG. 14 is a diagram of another interface according to an embodiment of this application;
FIG. 15 is a diagram of a structure of a cloud platform according to an embodiment of this application;
FIG. 16 is a diagram of a structure of a compute device according to an embodiment of this application;
FIG. 17 is a diagram of a structure of a compute device cluster according to an embodiment of this application; and
FIG. 18 is a diagram of another structure of a compute device cluster according to an embodiment of this application.

### DESCRIPTION OF EMBODIMENTS

Embodiments of this application provide an information processing method for an agent and a related device, to simplify a development process of an embodied agent and improve development efficiency.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

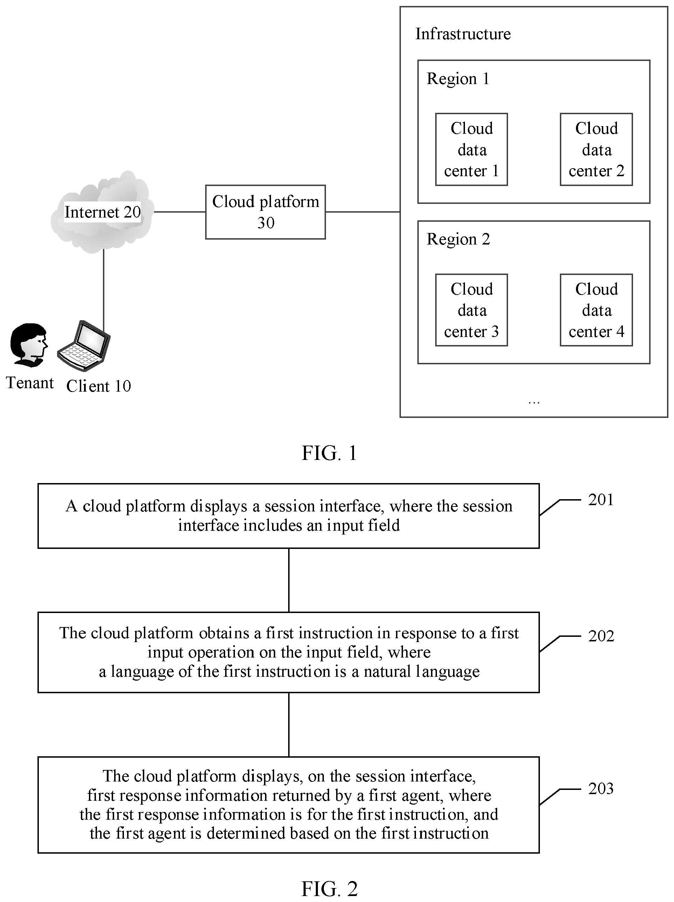

First, refer to FIG. 1. FIG. 1 is a diagram of a system architecture according to an embodiment of this application.

As shown in FIG. 1, a tenant logs, via a client 10 and an internet 20, in to a cloud platform 30 by using an account and a password that are registered on the cloud platform 30. The cloud platform 30 manages an infrastructure, where the infrastructure includes a plurality of data centers disposed in different regions (region), and at least one cloud data center is disposed in each region. For example, as shown in FIG. 1, a region 1 includes a cloud data center 1 and a cloud data center 2, and a region 2 includes a cloud data center 3 and a cloud data center 4. A plurality of servers are disposed in each cloud data center, and a service instance (including at least one of a virtual machine, a container, and a dedicated host) runs on the server.

The tenant may also be referred to as a user, and is a top-level object configured to manage cloud services and/or cloud resources. The tenant registers a tenant account and sets a tenant password on the cloud platform 30 via a local client (for example, a browser), and the local client remotely logs in to the cloud platform 30 by using the tenant account and the specified tenant password. The cloud platform 30 provides a configuration interface or an API for the tenant to configure and use cloud services.

In this embodiment of this application, the cloud platform 30 runs an agent system, the agent system includes a plurality of agents, and the plurality of embodied agents include at least one of a real embodied agent, a virtual embodied agent, and an AI agent.

The real embodied agent corresponds to a physical entity in a physical environment, performs a corresponding operation based on an instruction, and interacts with the physical entity or changes a status of the physical entity. The virtual embodied agent corresponds to a virtual embodied agent in a virtual environment, performs a corresponding operation based on an instruction, and may change the virtual environment, to act on the physical entity. In general, both the real embodied agent and the virtual embodied agent are agents that interact with the physical entity or can act on the physical entity. On the client 10, the embodied agent may be represented graphically. In other words, the embodied agent is actually an entity represented graphically. For example, alternatively, the embodied agent may be an entity like a virtual object, a digital entity, or a robot. This is not specifically limited herein.

The AI agent is configured to: manage another agent in the agent system, or provide an online service; and is configured to assist in development or running of the embodied agent.

In this embodiment of this application, the user develops or manages, by operating a terminal 10, the embodied agent included in the agent system running on the cloud platform 30. A specific implementation process is described in detail below.

In some optional implementations, corresponding to the system architecture provided in this embodiment of this application, the physical environment may be a scenario like logistics, port freight, a factory, home, or office, and the simulation environment may be a simulation of the physical environment. This is not specifically limited herein.

It should be noted that, in an actual application, the client 10 may also be another type of device, for example, a mobile phone, a tablet computer, a wearable device, a vehicle, an uncrewed aerial vehicle, or a smart home device. A computer device may be widely used in various scenarios, such as device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, smart office, smart wearable, smart transportation, and a smart city.

In the following, FIG. 2 is a schematic flowchart of a method for interaction between embodied agents according to an embodiment of this application. The method includes the following steps.

201. A cloud platform displays a session interface, where the session interface includes an input field.

The cloud platform displays the session interface via a computer device, where the session interface is used to display interaction between an agent and a user or between agents. The interaction may be represented by using a natural language in a text or voice form. In general, the session interface may be understood as a chat interface.

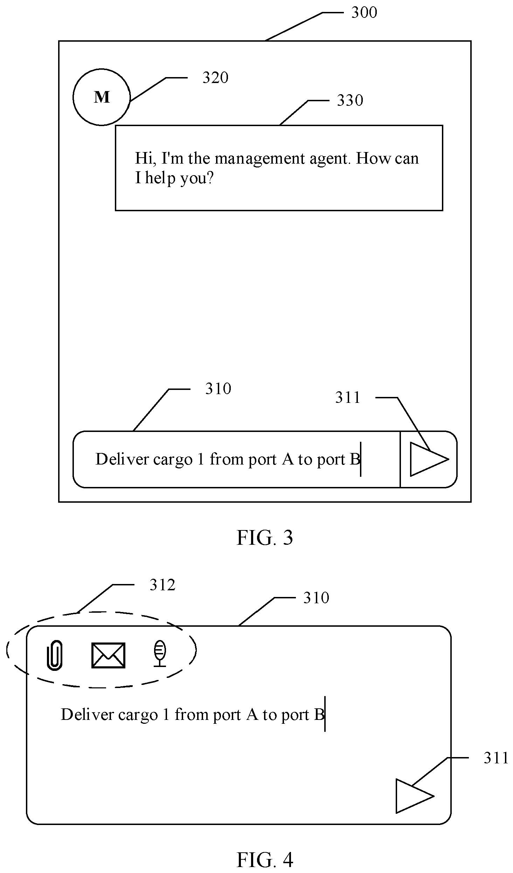

The session interface includes an input field, and the input field may be understood as a window for interaction between a user and an agent. The user performs an input operation on the input field to deliver an instruction. In an actual application, a form of the session interface and a form of the input field each have a plurality of possible implementations. The following uses FIG. 3 as an example for description. FIG. 3 is a diagram of a session interface according to an embodiment of this application.

As shown in FIG. 3, the session interface 300 includes an input field 310. In the embodiment shown in FIG. 3, a user enters content "Deliver cargo 1 from port A to port B" in the input field 310. When the user clicks a send control 311, the foregoing content is displayed on the session interface in a form shown in a session box 330.

In addition, as shown in FIG. 3, the session interface 300 may further display a session subject avatar 320, used to identify a sender of each session box 330.

It may be understood that the input field 310 shown in FIG. 3 is merely an example. In an actual application, the input field 310 may also be in another form. For example, refer to FIG. 4. FIG. 4 is a diagram of an input field according to an embodiment of this application.

As shown in FIG. 4, in addition to the send control 311, the input field 310 may further include other function controls 312. For example, the function controls 312 shown in FIG. 4 are respectively an attachment control, an email control, and a language control from left to right. The attachment control is used to add or modify an attachment, the email control is used for email transmission, and the voice control is used to input a voice. In an actual application, the input field 310 may further include more or fewer function controls. This is not specifically limited herein.

202. The cloud platform obtains a first instruction in response to a first input operation on the input field, where a language of the first instruction is a natural language.

The user performs the first input operation on the input field, and the cloud platform obtains the first instruction in response to the operation. In this embodiment of this application, the language of the first instruction is a natural language, that is, a language used by the user to enter content is a natural language. The natural language includes a text and a voice, and is a language used for human communication. In this embodiment of this application, a language of the natural language is not limited, for example, may be Chinese, English, or Korean, and is determined based on an actual application requirement. This is not limited herein.

For example, in the implementation shown in FIG. 3, the user enters the content "Deliver cargo 1 from port A to port B" in the input field 310, and clicks the send control 311, so that the cloud platform obtains the first instruction "Deliver cargo 1 from port A to port B".

Optionally, the user may perform the first input operation via an input device. The input device includes a device like a keyboard, a mouse, or a stylus. This is not specifically limited herein. Optionally, if a screen of a computer device that logs in to an account of the cloud platform is a touchscreen, the user may further directly perform, through a stylus or a finger, the first input operation on an input field displayed by the computer device.

203. The cloud platform displays, on the session interface, first response information returned by a first agent, where the first response information is for the first instruction, and the first agent is determined based on the first instruction.

After obtaining the first instruction, the cloud platform displays, on the session interface, the first response information returned by the first agent, that is, a sender of the first response information is the first agent.

In this embodiment of this application, the first instruction includes an execution body and/or an event, and the execution body indicates an object that completes the event. In general, the execution body is a subject of the first instruction, and indicates who completes the event included in the first instruction. The event of the first instruction indicates a purpose or an intent of the first instruction. In general, the event indicates a thing to be completed by the first instruction.

In this instance of this application, the first agent is determined based on the first instruction. Because the content of the first instruction has a plurality of possible implementations, the first agent also has a plurality of possible implementations. Descriptions are separately provided below.
(1) The first instruction includes an execution body and an event.

In this solution, it may be understood that the user specifies the execution body and the event to be completed by the execution body. The execution body specified by the user is the first agent. The user specifies the first agent in a plurality of possible manners. The first agent may be specified by using a special symbol, or the first agent may be used as a subject of the entered content. This is not specifically limited herein.

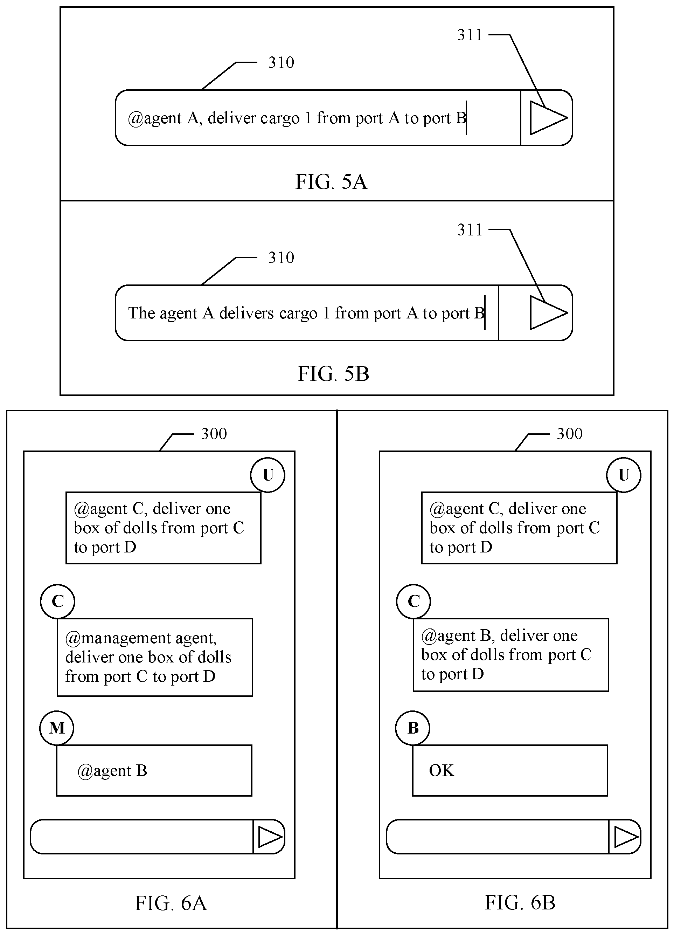

For example, refer to FIG. 5A and FIG. 5B. FIG. 5A and FIG. 5B are a diagram of an input field according to an embodiment of this application.

Optionally, as shown in FIG. 5A, the first agent is specified as an "agent A" by using a special symbol @. In an actual application, after the user enters the special symbol, the computer device may further display an agent list, and display a plurality of agents included in the agent, so that the user selects a first agent from the agent list.

In addition, in addition to @ shown in FIG. 5A, the special symbol may be another symbol, for example, # or *, and may be set based on an actual application requirement. This is not specifically limited herein.

Optionally, as shown in FIG. 5B, the user enters content: The agent A delivers cargo 1 from port A to port B. The computer device performs semantic recognition and analysis on the content, and determines that a subject of the content is the agent A, that is, determines that the first agent is the agent A.

In an actual application, the first agent may not be able to complete an event specified by the user. In this case, content indicated by the first response information has a plurality of possible implementations. Descriptions are separately provided below.
1. The first agent is a real embodied agent, and a function of the first agent matches the event.

That the first agent is the real embodied agent means that the first agent corresponds to a physical entity in a physical environment, and is a real object that can be seen and touched, for example, a robot, a robotic arm, a camera, or a sensor. That the function of the first agent matches the event means that the first agent can complete the event. In this case, in this solution, the first response information includes a status of the first agent and/or an event status corresponding to the first instruction.

The status of the first agent includes information that can reflect a current status of the first agent, such as whether the first agent accepts the first instruction, whether the first agent currently executes a task, and whether the first agent is faulty/is offline/has insufficient power.

Specific content of the event status corresponding to the first instruction varies with the event included in the first instruction. In general, the specific content may include event-related information such as a completion degree of an event at a current moment, an event phase at the current moment, estimated time of completing the event, and whether an obstacle is encountered during event processing.

For example, it is assumed that the first instruction is "The agent B delivers one box of dolls from port C to port D", that is, the first agent is the agent B, and the event is delivering one box of dolls from port C to port D. For different cases, the first response information may have different content.

Optionally, if the agent B is currently executing a previous task, first response information returned by the agent B may be "Executing the previous task. Wait a moment". Optionally, if the agent B currently has insufficient power, first response information returned by the agent B may be "The power is low. Select another agent to execute the task". Optionally, if the agent B is faulty, first response information returned by the agent B may be "Under maintenance, estimated wait time: 20 minutes". The first response information in the foregoing examples all reflects the status of the first embodied agent.

Optionally, if the road from port C to port D is currently closed, first response information returned by the agent B may be "Road closed. Plan your alternative route". Optionally, alternatively, first response information returned by the agent B may be "OK, heading to pick up cargo", "cargo picked up, in transit", or the like. The first response information in the foregoing examples all reflects the event status corresponding to the first instruction.

Optionally, if the agent B is in an idle state, and the road from port C to port D is smooth, the agent B delivers one box of dolls from port C to port D based on the first instruction, to implement transmission of the one box of dolls between the ports, thereby changing a physical entity in a physical environment. Alternatively, it may be understood that the agent B interacts with the physical entity.

For example, it is assumed that the first instruction is "The agent A takes a photo of port A", that is, the first agent is the agent A, and the event is taking a photo of port A. In this case, the first response information may be a photo of port A, which means that the event status corresponding to the first instruction is that the event is completed.

Optionally, if the first agent cannot immediately execute the event included in the first instruction, the first response information may further include prompt information, where the prompt information is used to remind the user to replace the agent, or provide the user with another optional embodied agent that can execute the event included in the first instruction.

In addition, it should be noted that a language of the first response information may be a natural language, a code language, a customized language, or the like. This is not specifically limited herein. For example, in a solution in which the first agent is faulty, the first response information may be customized code, and the code indicates that the first agent is faulty and cannot complete the event included in the first instruction.

In this embodiment of this application, when the first agent is the real embodied agent, the first instruction indicates the first agent, and the first agent can complete the event included in the first instruction, the first response information has a plurality of possible implementations, thereby enriching implementations of the technical solutions in this application. In addition, a status of the first agent and/or a status of the event included in the first instruction may be learned of based on the first response information, and whether to adjust the agent that executes the first instruction may be determined accordingly, thereby accelerating completion of the event included in the first instruction, and improving event completion efficiency.

2. The first agent is a real embodied agent, and a function of the first agent does not match the event.

If the function of the first agent does not match the event, it indicates that the first agent cannot complete the event. In this case, the first agent invokes the second agent to reply to the first instruction. In other words, the first response information includes invocation information for the second agent. The second agent is a first AI agent, and the first AI agent is configured to manage the agent system. Alternatively, the second agent is a real embodied agent, and a function of the second agent matches the event included in the first instruction. In this embodiment of this application, the first AI agent is also referred to as a management agent.

Descriptions are provided below with reference to a diagram. FIG. 6A and FIG. 6B are a diagram of a session interface according to an embodiment of this application.

In the embodiment shown in FIG. 6A and FIG. 6B, for example, the first instruction is "The agent C delivers one box of dolls from port C to port D", that is, the first agent is the agent C, and the event included in the first instruction is delivering one box of dolls from port C to port D.

The agent C cannot complete the event included in the first instruction. In the embodiment shown in FIG. 6A, first response information returned by the agent C is to invoke the first AI agent to execute the event included in the first instruction. In the embodiment shown in FIG. 6B, first response information returned by the agent C is to invoke the agent B to execute the event included in the first instruction. The function of the agent B matches the event included in the first instruction.

It may be understood that the embodiment shown in FIG. 6A and FIG. 6B is merely an example of the first response information. In an actual application, the first response information returned by the agent C may not include an event, but includes only an execution body (that is, includes only the agent B). In this solution, the agent B may identify, based on the session interface, the event included in the first instruction.

In addition, a language of the first response information may be a natural language, which means that in this embodiment of this application, different agents may also invoke each other by using a natural language.

In this application, in a solution in which the first agent indicated by the first instruction cannot complete the event included in the first instruction, the first response information returned by the first agent is actually the invocation information for the second agent, and the second agent implements the event included in the first instruction. In other words, in this application, agents may also invoke each other by using a natural language, thereby further simplifying development efficiency of the agents and also improving intelligence of the agents.

In some optional implementations, after displaying, on the session interface, the first response information returned by the first embodied agent, the computer device may further display, on the session interface, second response information returned by the second agent, where the second response information is for content of the first instruction. In other words, the second response information is actually a reply made by the second agent to the content of the first instruction.

Optionally, if the second agent is a management agent, the second response information includes invocation information for an agent that matches the event included in the first instruction, or information indicating that execution cannot be performed. The information indicating that execution cannot be performed indicates that the agent system cannot execute the event included in the first instruction.

For example, in the embodiment shown in FIG. 6A, after the agent C replies with the first response information, the management agent replies with the second response information. The second response information indicates to invoke the agent B to execute the event of the first instruction. Although in FIG. 6A, only content of the second response information is displayed as "@agent B", the agent B identifies content of the session interface, and may determine that the to-be-executed event is the event of the first instruction, that is, "Deliver one box of dolls from port C to port C".

Optionally, if the second agent is an embodied agent whose function matches the event included in the first instruction, the second response information includes a status of the second agent and/or an event status corresponding to the first instruction. Specific content of the second response information is similar to that of the first response information in the foregoing technical solution "1. The first agent is a real embodied agent, and a function of the first agent matches the event". For details, refer to the foregoing description. The details are not described herein again.

For example, in the embodiment shown in FIG. 6B, the first response information returned by the agent C indicates to invoke the agent B. After displaying the first response information, the session interface displays the second response information returned by the agent B. Content of the second response information is "OK", indicating that the second agent (that is, the agent B) is currently in a normal working state, and can execute the event included in the first instruction.

It may be understood that although the first response information is displayed before the second response information is displayed, the second response information is returned by the second agent invoked by the first response information, and the content included in the second response information is actually a reply to the first instruction.

In this application, in a solution in which the first agent indicated by the first instruction cannot complete the event included in the first instruction, after the first agent replies with the first response information, the second agent may further reply with the second response information. The second agent and the second response information each have a plurality of possible implementations, thereby enriching implementations and application scenarios of the technical solutions of this application, and improving flexibility and practicality of the technical solutions of this application.

3. The first agent is a virtual embodied agent, and a function of the first agent matches the event.

In this embodiment of this application, an execution body included in the first instruction may be a virtual embodied agent, and the virtual embodied agent corresponds to a virtual entity in a virtual environment. The virtual environment may also be understood as a simulation environment of a physical environment. The virtual entity is a virtualization or simulation of the physical entity. That is, the virtual embodied agent is a virtualization or simulation of a real embodied agent.

In this technical solution, content of the first response information is similar to that of the first response information in the foregoing technical solution in which "1. The first agent is a real embodied agent, and a function of the first agent matches the event". For details, refer to the foregoing description. A difference lies in that a status of the first agent included in the first response information is a status of the virtual embodied agent, and an event status corresponding to the first instruction included in the first response information is also an event status in the virtual environment.

In an actual application, the user may determine, based on the first response information, a running status of the agent system in the virtual environment, to determine whether to adjust the agent system or whether to apply the agent system to an actual physical scenario. In other words, performing evaluation in the virtual environment helps reduce development costs and improve development efficiency.

4. The first agent is a virtual embodied agent, and a function of the first agent does not match the event.

In this technical solution, content of the first response information is similar to that of the first response information in the foregoing technical solution in which "2. The first agent is a real embodied agent, and a function of the first agent does not match the event". For details, refer to the foregoing description. The details are not described herein again. A difference lies in that, in this technical solution, the first agent may also invoke another virtual embodied agent.

(2) The first instruction does not include an execution body, but includes an event.

In a solution in which the first instruction includes only the event, the first AI agent is used as the first agent by default, and the first response information includes invocation information for a third agent and/or information indicating that execution cannot be performed. A function of the third agent matches the event included in the first instruction.

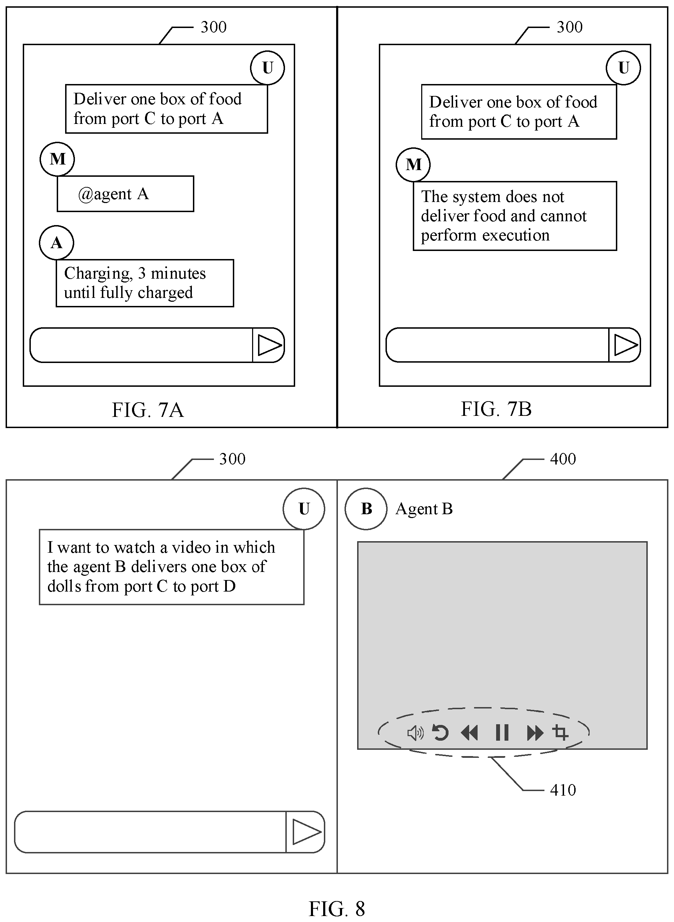

Descriptions are provided below with reference to a specific example. FIG. 7A and FIG. 7B are a diagram of a session interface according to an embodiment of this application.

It should be noted that, in the embodiment shown in FIG. 7A and FIG. 7B, for example, the first instruction is "Deliver one box of food from port C to port D", that is, the event included in the first instruction is delivering one box of dolls from port C to port D. If the first instruction does not include an execution body, the first AI agent is a first embodied agent by default.

Optionally, in the embodiment shown in FIG. 7A, first response information returned by the first AI agent is invocation information for a third agent (that is, the agent A). In this solution, after the first response information is displayed, response information returned by the third agent may be further displayed.

The response information returned by the third agent includes a status of the third agent and/or an event status corresponding to the first instruction. Specific content of the response information is similar to that of the first response information in the foregoing technical solution "1. The first agent is a real embodied agent, and a function of the first agent matches the event". For details, refer to the foregoing description. The details are not described herein again. For example, in the embodiment shown in FIG. 7A, the response information returned by the third agent is "Charging, 3 minutes until fully charged", indicating that the third agent (that is, the agent A) is currently in a charging state.

Optionally, in the embodiment shown in FIG. 7B, first response information returned by the first AI agent is information indicating that execution cannot be performed. The first response information indicates that "The system does not deliver food", which means that none of the agents included in the current agent system can execute the first instruction.

In this application, in a solution in which the first instruction does not include the execution body, the first AI agent replies with the first response information by default. In other words, even if the first instruction entered by the user is incomplete, a reply can still be obtained, thereby simplifying an operation of the user and further simplifying development of the agent. In addition, the first AI agent may invoke another agent to complete the event included in the first instruction, or reply with the information indicating that execution cannot be performed, so that the user learns of a progress of the event included in the first instruction, thereby improving practicality of the technical solutions of this application.

(3) The first instruction includes an execution body, but does not include an event.

In a solution in which the first instruction includes the execution body but does not include the event, the first agent is an agent indicated by the execution body. The first response information includes prompt information, and the prompt information is used to remind the user to input an event, or is used to display a default function of the first agent, or is used to display a latest operation of the first agent.

It can be learned from the foregoing description that, in this embodiment of this application, interaction with the agent is performed by using a natural language, to simplify a complex development or management process. Further, in a solution in which the first agent includes an embodied agent or the first agent manages the embodied agent, complexity of developing the embodied agent is reduced, and development efficiency is improved.

In the foregoing description, interaction between the agent and the user and interaction between the agents provided in embodiments of this application are described. The event included in the first instruction is not limited in the foregoing embodiments, and is determined based on an actual application requirement.

For example, in the embodiments shown in FIG. 3 to FIG. 7B, the first instruction is for a port freight scenario, and the event included in the first instruction is port freight transportation. In an actual application, the agent system may also be used in other scenarios, such as an office scenario and a home scenario, and the first instruction also changes correspondingly.

In this embodiment of this application, the agent system further has other functions, for example, data stream display, simulation environment construction or modification, and code generation and detection. Descriptions are separately provided below.

In some optional implementations, the agent system may further display a data stream. In other words, the cloud platform may further display the data stream, where the data stream is used to reflect a status or a trajectory of a physical entity in a physical environment, or reflect a status or a trajectory of a virtual entity in a simulation environment. The cloud platform displays a target data stream in a plurality of possible manners. Descriptions are separately provided below.

The cloud platform obtains a second instruction in response to a second input operation on the input field, where the second instruction instructs to display a data stream of a target event, the target event is an event that has been executed or is being executed by the agent system, and a language of the second instruction is a natural language.

Optionally, the cloud platform may directly display the data stream of the target event based on the second instruction. An implementation of the second input operation is similar to that of the first input operation. Details are not described herein again.

Optionally, after obtaining the second instruction, the cloud platform may further display third response information on the session interface, where the third response information is for the second instruction. In other words, the third response information indicates the data stream of the target event. Then, the cloud platform displays the data stream of the target event in response to a touch operation on the third response information.

In this application, after obtaining the second instruction, the cloud platform can not only directly display the data stream of the target event, but also display the data stream of the target event by displaying the third response information on the session interface, thereby enriching implementations and application scenarios of the technical solutions in this application, and improving flexibility of the technical solutions.

In this embodiment of this application, the data stream of the target event has a plurality of possible implementations, including a real-time data stream of the target event, a historical data stream of the target event, a first-person perspective data stream of the target event, or a third-person perspective data stream of the target event. The first-person perspective is a perspective of an agent that executes the target event, and may also be referred to as a participant perspective. The third-person perspective is a perspective of the agent system, or may be understood as a global perspective. In general, the third-person perspective may also be referred to as a God's eye view or a bystander perspective. For example, in a port freight scenario, the third-person perspective is a perspective observed by an overhead camera above a port.

Optionally, because the target event includes an event that has been executed or is being executed by the agent system, a type of the data stream of the target event may be set by default based on this. For example, in a solution in which the target event is the event that has been executed by the agent system, the data stream of the target event is set to a historical data stream by default; or in a solution in which the target event is the event that is being executed by the agent system, the data stream of the target event is set to a real-time data stream by default.

In this embodiment of this application, a display location of the data stream of the target event has a plurality of possible implementations, which may be displayed on the session interface, or may be displayed on an interface other than the session interface.

In this embodiment of this application, the display location of the data stream of the target event and the data stream of the target event each have a plurality of possible implementations, and may be determined based on an actual application, thereby further improving flexibility of the technical solutions of this application.

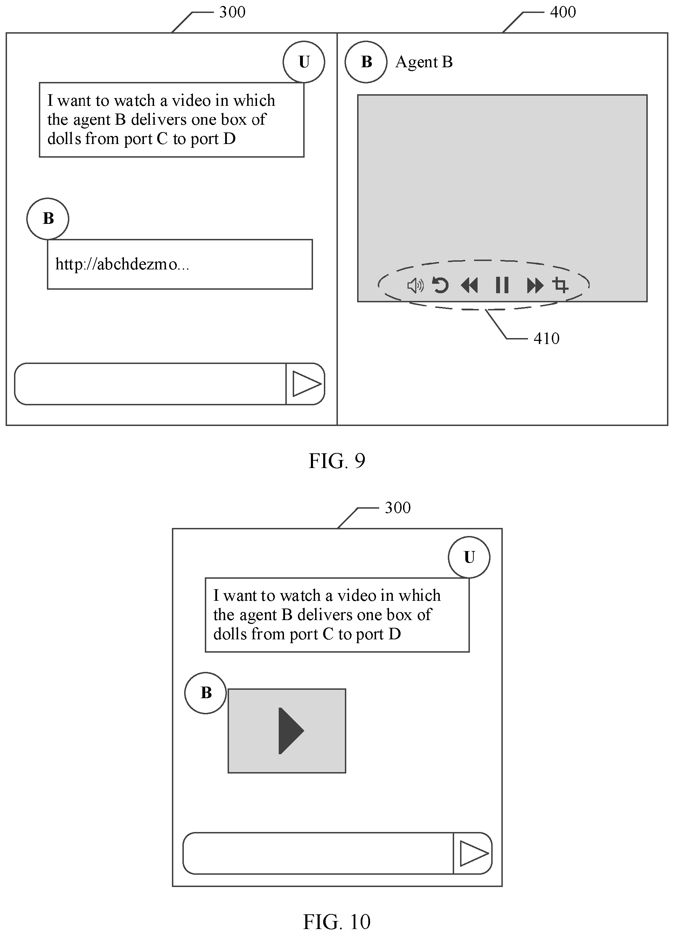

With reference to a diagram, the following further describes a process in which the computer device displays the data stream of the target event. FIG. 8 and FIG. 9 each are a diagram of an interface according to an embodiment of this application. FIG. 10 is a diagram of a session interface according to an embodiment of this application.

It should be noted that, in the embodiments shown in FIG. 8 to FIG. 10, for example, content of the first instruction is "I want to watch a video stream in which the agent B delivers one box of dolls from port C to port D", that is, the target event is delivering one box of dolls from port C to port D, and the data stream is a first-person perspective video stream, which is a perspective of the agent B.

In the embodiment shown in FIG. 8, after displaying the first instruction, the session interface 300 directly displays a data stream from the perspective of the agent B on a data stream display interface 400. Specifically, a display area of the data stream may be shown by a shadow area shown in FIG. 8.

In the embodiment shown in FIG. 9, after displaying the first instruction, the session interface 300 displays third response information returned by the agent B. The third response information is a website address. The computer device displays a data stream display interface 400 in response to a click operation on the website address, to display the data stream of the target event. In other words, the user clicks the link to display the data stream display interface 400.

It should be noted that, in the embodiment shown in FIG. 9, for example, the third response information includes the website address. In an actual application, the third response information may further include another type of medium, for example, a link or a file, provided that the third response information indicates the data stream of the target event. In addition, the data stream display interface 400 may also be displayed by using other software. The other software is software different from software that provides the session interface 300, for example, separate video playback software.

In some optional implementations, the third response information may further include historical data streams in different time periods. The user may select a time period needed by the user, and may select the time period by using a natural language, or click a corresponding link or selection box. This is not specifically limited herein.

Optionally, after the user clicks the medium included in the third response information, a prompt sub-interface may be further displayed, to prompt the user whether to confirm to display the data stream of the target event. After the user performs confirmation, the data stream display interface 400 is triggered to be displayed. The user performs confirmation in a plurality of possible manners, for example, clicking a confirm control included in the prompt sub-interface, or performing no operation within preset duration, which may be selected based on an actual application requirement. This is not specifically limited herein.

In addition, it should be noted that, in the embodiments shown in FIG. 8 and FIG. 9, the session interface 300 and the data stream display interface 400 are displayed. In an actual application, the data stream display interface 400 may also be overlaid on the session interface 300, or the data stream display interface 400 overlaps the session interface 300, and the data stream interface 400 blocks the session interface 300, or the like. Display locations of the two interfaces may be selected based on an actual application. This is not specifically limited herein.

Optionally, as shown in FIG. 8 and FIG. 9, the data stream display interface 400 may further include function controls 410. The function controls 410 are respectively a volume control, a rotation control, a back control, a pause control, a forward control, and a screenshot control from left to right, which are respectively configured to: control video volume, rotate a video display angle, play back a video, pause playback, fast-forward a video, and take a screenshot. In an actual application, more or fewer function controls may be further included, for example, a playback speed control. This is not specifically limited herein.

In the embodiment shown in FIG. 10, after the session interface 300 displays the first instruction, the cloud platform displays, on the session interface 300, a video stream of a target event returned by the agent B. Specifically, a display area of the video stream may be shown by a shadow area in FIG. 10. In other words, the data stream of the target event may be embedded in the session interface for display.

It should be further noted that the shadow areas shown in FIG. 8 to FIG. 10 are merely examples of the display area of the video stream. In an actual application, the area may also be scaled up or down, rotated, or the like based on a user operation. This is not specifically limited herein.

In the embodiments shown in FIG. 8 to FIG. 10, the first instruction specifies a perspective of the data stream of the target event. In an actual application, the perspective may not be specified. In this solution, the data stream of the target event displayed by the computer device has a plurality of possible implementations.

Optionally, it may be set by default to display a first-person perspective video stream or a third-person perspective video stream of the target event. A switching control may be further displayed, to switch a perspective of the data stream of the target event.

Optionally, it may be set by default to display a first-person perspective data stream and a third-person perspective data stream of the target event. Then, a data stream from a specific perspective is scaled up or down based on a user selection.

In the embodiments shown in FIG. 8 to FIG. 10, the first instruction specifies a specific event that is the target event. In an actual application, a perspective may be specified, but a specific event is not specified. In this solution, the data stream of the target event displayed by the cloud platform has a plurality of possible implementations. Optionally, it may be set by default to display a data stream of an event that is currently being executed by the embodied agent. Optionally, it may be set by default to display a historical data stream of a latest event currently executed by the embodied agent. Optionally, it may be set by default to display a data stream in a default time period. This is not specifically limited herein.

In addition, it should be noted that, in the embodiments shown in FIG. 8 to FIG. 10, the video stream is used as an example. In an actual application, the data stream may also be a data stream of another sensor, for example, an infrared sensor, a laser sensor, a radar, or an inertial measurement unit (inertial measurement unit, IMU). This is not specifically limited herein.

In some optional implementations, the agent system provided in this embodiment of this application further constructs or changes a simulation environment. The simulation environment is used to develop or detect an embodied agent. In general, the cloud platform obtains a third instruction in response to a third input operation on the input field, where a language of the third instruction is a natural language, and the third instruction instructs to construct a target simulation environment, that is, an event included in the third instruction is constructing the target simulation environment. The cloud platform displays the target simulation environment on a simulation interface based on the third instruction.

Optionally, if the third instruction does not include an execution body, the computer device may display, on the session interface, response information returned by the first AI agent, where the response information is used to invoke a simulation agent to execute the third instruction.

Optionally, if an execution body included in the third instruction is a second AI agent, the second AI agent executes the third instruction. The second AI agent is configured to construct a simulation environment, and may also be referred to as a simulation agent.

Optionally, if an execution body included in the third instruction cannot display the target simulation environment, the execution body may invoke a second AI agent to execute the third instruction.

The foregoing three possible implementations are similar to the foregoing plurality of possible implementations in which the cloud platform invokes the first agent to reply to the first instruction with the first response information. Details are not described herein again.

The simulation interface is configured to visually display a 3D or 2D virtual environment, and the virtual environment is also a simulation environment. In addition, the cloud platform displays the simulation interface in a plurality of possible manners. This is similar to the data stream display interface 400 in the embodiments shown in FIG. 8 to FIG. 10. For details, refer to the foregoing description. The details are not described herein again.

For example, the user enters a requirement for the simulation environment, for example, "Construct a simulation environment of a dock, including three ports and six piles of cargo, and the weather is sunny and the time is morning". The instruction does not specify an execution body, and the first AI agent invokes the second AI agent to execute the instruction. There may be one second AI agent that is responsible for implementing construction of the foregoing simulation environment; or there may be a plurality of second AI agents that have different functions, for example, changing light, a quantity of objects, a texture, and a location. In a solution in which there is one second agent, other agents do not need to be constructed, thereby reducing a computation amount. In a solution in which there are a plurality of second agents, responsibilities of the agents are clear, which facilitates maintenance.

The different functions mentioned above include but are not limited to: changing object attributes such as types, a quantity, textures, locations, and forms of objects in the simulation environment; changing environmental factors such as illumination and humidity in the environment; and generating events, test cases, and the like executed by the embodied agent.

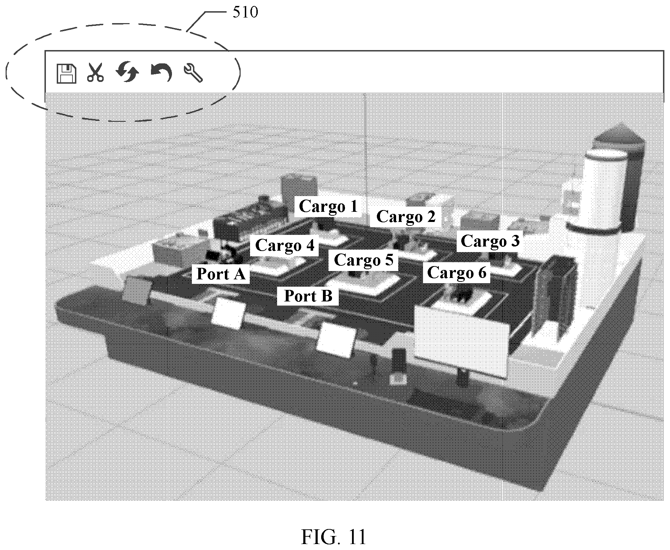

For example, refer to FIG. 11. FIG. 11 is a diagram of a simulation interface according to an embodiment of this application.

As shown in FIG. 11, the simulation interface displays a dock in a 3D form, including three ports and six piles of cargo. In the embodiment shown in FIG. 11, the three ports are adjacent to each other. However, because a line of sight is blocked, port C adjacent to port B is not displayed in FIG. 11.

In some optional implementations, the simulation interface may further include function controls 510. In the embodiment shown in FIG. 11, functions of the function controls 510 from left to right are respectively Save, Cut, Refresh, Undo, and Select tool. In an actual application, the simulation interface may further include more or fewer function controls. This is not specifically limited herein.

In the simulation environment, a virtual embodied agent corresponds to a simulation entity in the simulation environment. For example, in the embodiment shown in FIG. 11, it is assumed that the simulation environment further includes a simulation robot 1 and a simulation robot 2, both configured to transport cargo. In this case, the user may invoke the virtual embodied agent to simulate cargo transportation, or simulate mutual invocation between embodied agents on the session interface.

In other words, in this embodiment of this application, the cloud platform obtains a fifth instruction in response to a fifth input operation on the input field, where a language of the fifth instruction is a natural language, and an event included in the fifth instruction matches a function of a virtual embodied agent. The cloud platform displays fourth response information returned by the virtual embodied agent on the session interface, where the fourth response information includes a status of the virtual embodied agent and/or an event status corresponding to the fourth instruction.

For example, it is assumed that the simulation environment shown in FIG. 11 includes a virtual embodied agent A, and a function of the virtual embodied agent A is to transport cargo between port A and port B. The event included in the fifth instruction entered by the user is delivering one box of cargo from port A to port B.

Optionally, if an execution body included in the fifth instruction is the virtual embodied agent A, the cloud platform displays the fourth response information on the session interface. For example, the virtual embodied agent A replies with "OK" on the session interface, and correspondingly, in the simulation environment, the virtual embodied agent A is in a freight transportation state.

Optionally, if a function of an execution body included in the fifth instruction does not match the foregoing event, the fourth response information may be invocation information for the virtual embodied agent A, so that the virtual embodied agent A executes the foregoing event. In addition, the session interface may also display response information returned by the virtual embodied agent A.

Optionally, if the fifth instruction does not include an execution body, before displaying the fourth response information, the cloud platform may further display response information returned by the first AI agent, where the response information is invocation information for the virtual embodied agent A.

In this application, the virtual embodied agent may be further invoked to complete the instruction, so as to change a virtual environment, and also simulate a change in a real physical environment, providing a reference for applying a corresponding physical entity in the physical environment, that is, providing simulation data, thereby improving practicality of the technical solutions of this application.

In this embodiment of this application, the computer device may further determine a type of data generated in the simulation environment.

Optionally, the computer device obtains a fourth instruction in response to a fourth input operation on the input field, where a language of the fourth instruction is a natural language, and the fourth instruction instructs to generate data of a target type; and displays a fourth response message on the session interface based on the fourth instruction, where the fourth response message indicates the data of the target type. Optionally, the fourth response information may include the data of the target type, or include a medium indicating the data of the target type. In the latter solution, the cloud platform displays the data of the target type in response to a touch operation on the medium.

Optionally, the cloud platform may also configure, by default, a type of data generated in the simulation environment. That is, in a solution in which the user does not specify the type of the generated data, the cloud platform displays the generated data of the default type.

In this embodiment of this application, the target type has a plurality of possible implementations, including radar data, depth data, RGB data, trajectory data, and the like. This is not specifically limited herein.

In this application, the cloud platform may further display a simulation environment. Based on the simulation environment, simulation or emulation of a physical entity can be implemented, and embodied agents can be developed and detected. In addition, in this application, a type of data generated in the simulation environment may be further indicated. The type of the data and the fourth response information each have a plurality of possible implementations, thereby enriching implementations of the technical solutions in this application.

In some optional implementations, the agent system provided in this embodiment of this application may further perform code generation and detection. In general, the cloud platform obtains a sixth instruction in response to a sixth input operation on the input field, where a language of the sixth instruction is a natural language, and the sixth instruction instructs to generate skill code of a fourth agent. The cloud platform displays the skill code of the fourth agent on a code interface based on the sixth instruction. That is, an event included in the sixth instruction is generating the skill code of the fourth agent. The skill code is used to describe a function of the fourth agent, and may further describe working logic of the fourth agent.

Optionally, if the sixth instruction does not include an execution body, the computer device may display, on the session interface, response information returned by the first AI agent, where the response information is used to invoke a third AI agent to execute the sixth instruction. The third AI agent is configured to generate code of the agent.

Optionally, if an execution body included in the sixth instruction is a third AI agent, the third AI agent executes the sixth instruction.

Optionally, if an execution body included in the sixth instruction cannot generate the skill code of the fourth agent, the execution body may invoke a third AI agent to execute the sixth instruction.

The foregoing three possible implementations are similar to the foregoing plurality of possible implementations of the first response information. Details are not described herein again.

In addition, the computer device displays the code interface in a plurality of possible manners. This is similar to the data stream display interface 400 in the embodiments shown in FIG. 8 to FIG. 10. For details, refer to the foregoing description. The details are not described herein again.

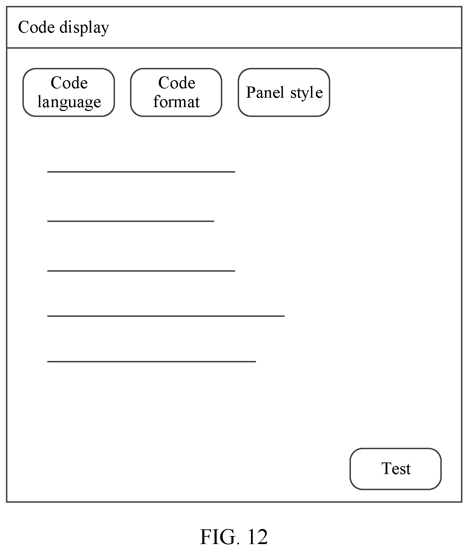

In some optional implementations, in addition to displaying code, the code interface may further display function controls, configured to implement different functions. For example, refer to FIG. 12. FIG. 12 is a diagram of a code interface according to an embodiment of this application.

As shown in FIG. 12, the code interface includes a code language control, and the control is configured to set a language type of code displayed on the code interface. For example, the user clicks the control, and the code interface may display a code language selection bar, where the selection bar includes a plurality of code languages, which are selected and determined by the user.

As shown in FIG. 12, the code interface may further include a code format control, configured to set a format of code, including a font, a font size, a color, and the like of the code.

As shown in FIG. 12, the code interface may further include a panel style control, configured to set a style of the code interface, including a background color of the code interface, whether to use a night mode, and the like.

In some optional implementations, the agent system provided in this embodiment of this application may further detect code. The cloud platform tests the skill code of the fourth agent, and displays a test result of the skill code of the fourth agent.

Optionally, as shown in FIG. 12, the code interface may include a test control. When the user clicks the test control, the cloud platform tests the skill code of the fourth agent displayed on the code interface.

Optionally, detection of the skill code may also be triggered on the session interface. For example, the user enters "Detect the skill code of the fourth agent" in the input field on the session interface, and the first AI agent invokes a code detection agent to detect the skill code of the fourth agent. Then, the code detection agent may reply with a test result of the detection on the session interface. Optionally, the code detection agent and the foregoing third AI agent configured to generate code may be different AI agents, or may be a same AI agent, and both may be code agents.

Optionally, the code generated by the cloud platform may be stored by the first AI agent or the code agent in a specific location, and a code name is specified. When the user needs to detect code in a virtual environment, the user specifies a code name and a detection event, and the cloud platform may also test code corresponding to the code name via the code detection agent. The code agents include a code detection agent and a code generation agent.

In this application, the cloud platform may further generate and display the skill code of the agent, thereby providing a basis for code detection and improving implementability of the technical solutions. In addition, the code is detected, so that the user determines whether the code can be accurately executed, thereby improving development accuracy of the agent.

In the foregoing embodiments shown in FIG. 8 to FIG. 12, the data stream display interface, the code interface, and the simulation interface each are displayed based on the input operation performed by the user on the input field. In an actual application, the data stream display interface, the code interface, and the simulation interface may be further displayed in other manners. Descriptions are provided below.

In some optional implementations, the cloud platform may further display a menu bar, where the menu bar includes display controls of different interfaces. The user clicks the control, and the cloud platform displays an interface corresponding to the control.

In some optional implementations, the cloud platform may further display a search bar. The user enters, in the search bar, an instruction indicating that an event is displaying a specific interface, for example, "display an XX interface", and the cloud platform displays a corresponding interface.

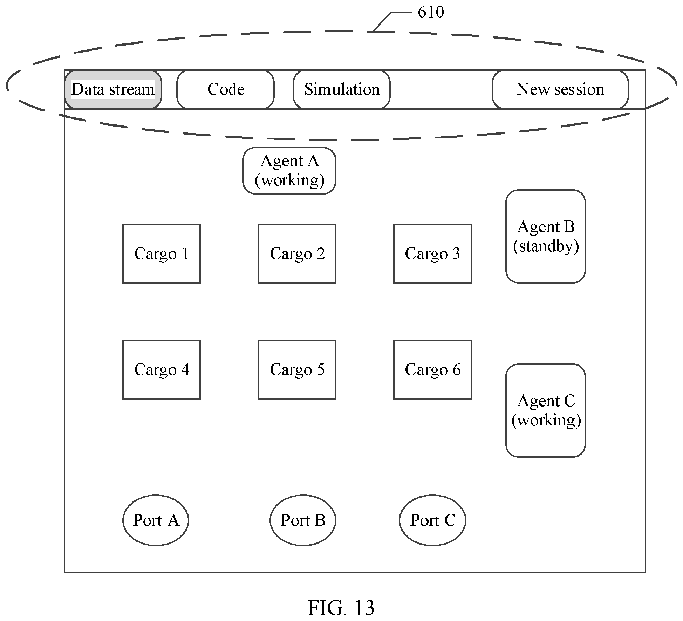

For example, refer to FIG. 13. FIG. 13 is a diagram of an interface according to an embodiment of this application.

As shown in FIG. 13, a menu bar includes four display controls 610, which are respectively a data stream interface display control, a code interface display control, a simulation interface display control, and a session interface display control from left to right.

Optionally, the user clicks the code interface display control, and the cloud platform may display the code interface shown in FIG. 12. The user clicks the simulation interface display control, and the cloud platform may display the simulation interface shown in FIG. 11.

In some optional implementations, the user clicks a display control, and the cloud platform may further display a next-level menu. For example, in the embodiment shown in FIG. 13, the user clicks the data stream interface display control, and the cloud platform displays a perspective selection menu, so that the user chooses to display a first-person perspective data stream and/or a third-person perspective data stream.

For example, in the embodiment shown in FIG. 13, the cloud platform displays a third-person perspective video stream, and a status of each agent may be further marked in the video stream.

In some optional implementations, the cloud platform may further display an introduction interface of agents, where the interface is configured to display functions of the agents.

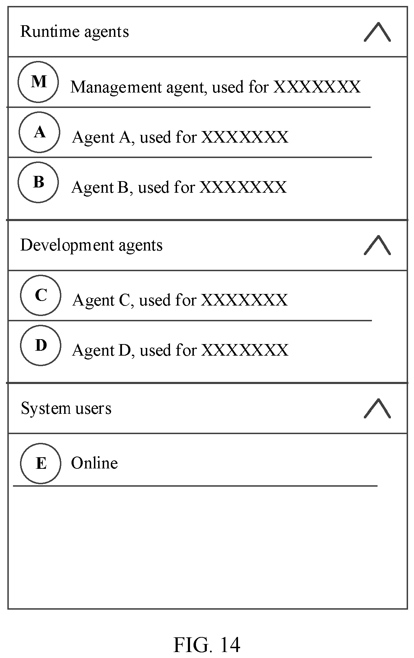

For example, refer to FIG. 14. FIG. 14 is a diagram of an interface according to an embodiment of this application.

As shown in FIG. 14, the agents include runtime agents, development agents, and system users. The runtime agents are configured to assist in running of agents, and may be specifically agents used in actual running, such as a management agent, an agent A configured to transport cargo, or an agent B configured to clear roadblocks. The development agents are configured to assist in development of agents, and may be specifically a simulation agent, a code detection agent, an agent that changes a simulation environment, and the like.

As shown in FIG. 14, the computer device may display a function of an agent following an avatar of the agent. In an actual application, the function of the agent may be displayed in another manner.

Optionally, the function of the agent may be displayed when an input device moves to a specific area, where the specific area includes an avatar display area of the agent.

Optionally, the function of the agent may also be displayed by performing a specific operation, for example, right-clicking or double-clicking an avatar of the agent.

Optionally, the function of the agent may be further displayed on a session interface. For example, the user @mentions an agent to trigger the agent to reply with a function introduction. Alternatively, the user @mentions an agent and asks the agent to introduce its function.

It should be noted that the interfaces shown in the foregoing embodiments are merely examples, and do not limit an interface actually displayed in the method for interaction between embodied agents provided in embodiments of this application.

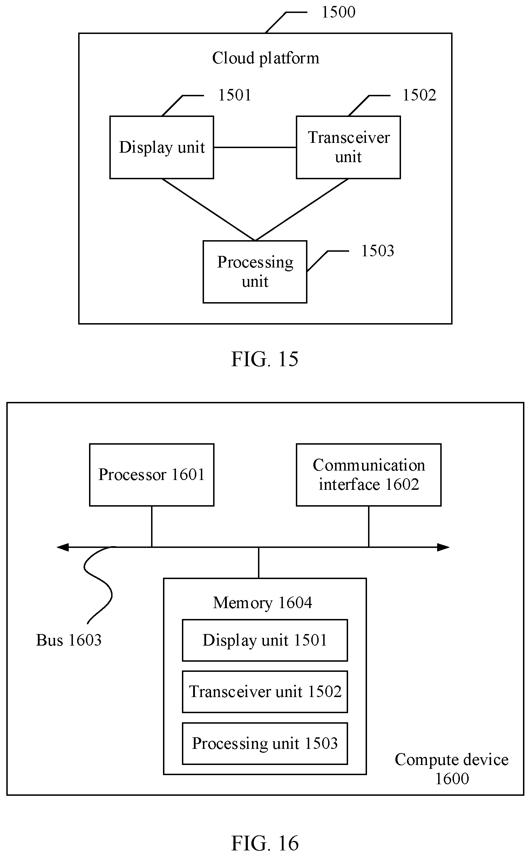

In the following, FIG. 15 is a diagram of a structure of a cloud platform according to an embodiment of this application. The cloud platform runs an agent system, and the agent system includes a plurality of agents.

In some optional implementations, the cloud platform 1500 includes:
a display unit 1501, configured to display a session interface, where the session interface includes an input field; and
a transceiver unit 1502, configured to obtain a first instruction in response to a first input operation on the input field, where a language of the first instruction is a natural language.

The display unit 1501 is further configured to display, on the session interface, first response information returned by a first agent, where the first response information is for the first instruction, and the first agent is determined based on the first instruction.

In some optional implementations, the first agent is a real embodied agent. If an execution body included in the first instruction is the first agent, and an event included in the first instruction matches a function of the first agent, the first response information includes at least one of the following: a status of the first agent and an event status corresponding to the first instruction.

In some optional implementations, the first agent is a real embodied agent. If an execution body included in the first instruction is the first agent, and an event included in the first instruction does not match a function of the first agent, the first response information includes invocation information for a second agent, where the second agent is a real embodied agent, and a function of the second agent matches the event; or the second agent is a first AI agent, and the first AI agent is configured to manage the agent system.

In some optional implementations, the display unit 1501 is further configured to display, on the session interface, second response information returned by a second agent, where the second response information is for the first instruction.

In some optional implementations, if the first instruction does not include an execution body, the first agent is a first AI agent, and the first response information includes invocation information for a third agent, where a function of the third agent matches an event included in the first instruction.

In some optional implementations, in a solution in which the first instruction includes an execution body but does not include an event, the first agent is an agent indicated by the execution body. The first response information includes prompt information, and the prompt information is used to remind the user to input an event, or is used to display a default function of the first agent, or is used to display a latest operation of the first agent.

In some optional implementations, the transceiver unit 1502 is further configured to obtain a second instruction in response to a second input operation on the input field, where the second instruction instructs to display a data stream of a target event, the target event is an event that has been executed or is being executed by the agent system, and a language of the second instruction is a natural language. The display unit 1501 is further configured to display the data stream of the target event.

In some optional implementations, the display unit 1501 is further configured to: display third response information on the session interface, where the third response information is for the second instruction; and display the data stream of the target event in response to a touch operation on the third response information.

In some optional implementations, the display unit 1501 is specifically configured to: display the data stream of the target event on the session interface, or display the data stream of the target event on an interface other than the session interface.

In some optional implementations, the data stream of the target event includes a real-time data stream of the target event, a historical data stream of the target event, a first-person perspective data stream of the target event, or a third-person perspective data stream of the target event; and the first-person perspective is a perspective of an agent that executes the target event, and the third-person perspective is a perspective of the agent system.

In some optional implementations, the transceiver unit 1502 is further configured to obtain a third instruction in response to a third input operation on the input field, where a language of the third instruction is a natural language, and the third instruction instructs to construct a target simulation environment; and the display unit 1501 is further configured to display the target simulation environment on a simulation interface based on the third instruction.

In some optional implementations, the transceiver unit 1502 is further configured to obtain a fourth instruction in response to a fourth input operation on the input field, where a language of the fourth instruction is a natural language, and the fourth instruction instructs to generate data of a target type; and the display unit 1501 is further configured to display a fourth response message on the session interface based on the fourth instruction, where the fourth response message indicates the data of the target type.

In some optional implementations, the transceiver unit 1502 is further configured to obtain a fifth instruction in response to a fifth input operation on the input field, where a language of the fifth instruction is a natural language, and an event included in the fifth instruction matches a function of a virtual embodied agent; and the display unit 1501 is further configured to display fourth response information returned by the virtual embodied agent on the session interface, where the fourth response information includes a status of the virtual embodied agent and/or an event status corresponding to the fourth instruction.

In some optional implementations, the transceiver unit 1502 is further configured to obtain a fifth instruction in response to a fifth input operation on the input field, where a language of the fifth instruction is a natural language, and the fifth instruction instructs to generate skill code of a fourth agent; and the display unit 1501 is further configured to display the skill code of the fourth agent on a code interface based on the fifth instruction.

In some optional implementations, the processing unit 1503 is further configured to test the skill code of the fourth agent; and the display unit 1501 is further configured to display a test result of the skill code of the fourth agent.

The display unit 1501, the transceiver unit 1502, and the processing unit 1503 may all be implemented by software or hardware. For example, the following uses the processing unit 1503 as an example to describe an implementation of the processing unit 1503. Similarly, for an implementation of the obtaining unit 801, refer to the implementation of the processing unit 1503.

As an example of a software functional unit, the processing unit 1503 may include code running on a computing instance. The computing instance may include at least one of a physical host (compute device), a virtual machine, and a container. Further, there may be one or more computing instances. For example, the processing unit 1503 may include code running on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region or between VPCs in different regions. Interconnection between the VPCs is implemented through the communication gateway.

As an example of a hardware functional unit, the processing unit 1503 may include at least one compute device, for example, a server. Alternatively, the processing unit 1503 may be a device implemented via an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the processing unit 1503 may be distributed in a same region, or may be distributed in different regions. The plurality of compute devices included in the processing unit 1503 may be distributed in a same AZ, or may be distributed in different AZs. Similarly, the plurality of compute devices included in the processing unit 1503 may be distributed in a same VPC, or may be distributed in a plurality of VPCs. The plurality of compute devices may be any combination of compute devices such as a server, an ASIC, a PLD, a CPLD, an FPGA, and GAL.

It should be noted that the display unit 1501, the transceiver unit 1502, and the processing unit 1503 implement different steps in the information processing method for an agent, to implement all functions of the cloud platform 1500. The cloud platform 1500 is configured to implement operations performed by the computer device in the embodiments shown in FIG. 1 to FIG. 14, to implement the method for interaction between agents provided in embodiments of this application. Details are not described herein again.

FIG. 16 is a diagram of a structure of a compute device according to an embodiment of this application. The compute device 1600 includes a processor 1601, a communication interface 1602, a bus 1603, and a memory 1604. The processor 1601, the communication interface 1602, and the memory 1604 communicate with each other through the bus 1603. In an actual application, communication may also be implemented through another means such as wireless transmission. This is not specifically limited herein.

The compute device 1600 may be a server or a terminal device. It should be understood that a quantity of processors and a quantity of memories in the compute device 1600 are not limited in this application.

The processor 1601 may include any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 1602 uses a transceiver module, for example, but not limited to, a network interface card or a transceiver, to implement communication between the compute device 1600 and another device or a communication network.

The bus 1603 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 16, but it does not mean that there is only one bus or only one type of bus. The bus 1603 may include a path for transmitting information between the components (for example, the memory 1604, the processor 1601, and the communication interface 1602) of the compute device 1600.

The memory 1604 may include a volatile memory (volatile memory), for example, a random access memory (random access memory, RAM). The memory 1604 may also include a non-volatile memory (non-volatile memory), for example, a read-only memory (read-only memory, ROM), a flash memory, a hard disk drive (hard disk drive, HDD), or a solid-state drive (solid-state drive, SSD).

The memory 1604 stores executable program code, and the processor 1601 executes the executable program code to separately implement functions of the display unit 1501, the transceiver unit 1502, and the processing unit 1503, to implement the data processing method for an agent. In other words, the memory 1604 stores instructions used to perform the data processing method for an agent.

An embodiment of this application further provides a compute device cluster. The compute device cluster includes at least one compute device. The compute device may be a server, for example, a central server, an edge server, or a local server in a local data center. In some optional implementations, the compute device may also be a terminal device, for example, a desktop computer, a notebook computer, or a smartphone.

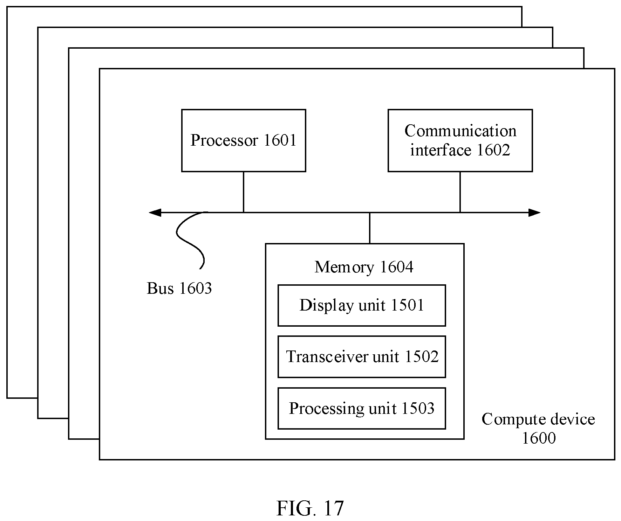

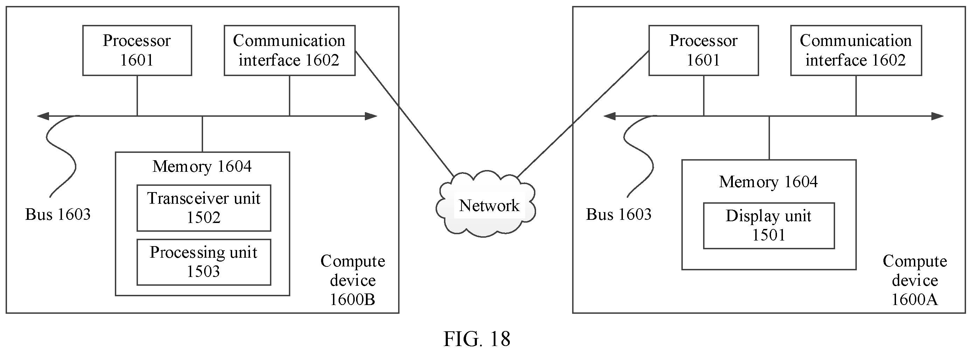

FIG. 17 and FIG. 18 each are a diagram of a structure of a compute device cluster according to an embodiment of this application.

As shown in FIG. 17, the compute device cluster includes at least one compute device 1600. A memory 1604 in one or more compute devices 1600 in the compute device cluster may store same instructions used to perform the data processing method for an agent provided in embodiments of this application.

In some possible implementations, alternatively, a memory 1604 in one or more compute devices 1600 in the compute device cluster may separately store some instructions used to perform the data processing method for an agent. In other words, a combination of the one or more compute devices 1600 may jointly execute the instructions used to perform the data processing method for an agent.

It should be noted that memories 1604 in different compute devices 1600 in the compute device cluster may store different instructions, which are separately used to perform some functions of the cloud platform. In other words, the instructions stored in the memories 1604 in the different compute devices 1600 may be used to implement functions of one or more of the display unit 1501, the transceiver unit 1502, and the processing unit 1503.

In some possible implementations, the one or more compute devices in the compute device cluster may be connected through a network. The network may be a wide area network, a local area network, or the like. FIG. 18 shows a possible implementation. As shown in FIG. 18, two compute devices 1600A and 1600B are connected through a network. Specifically, each compute device is connected to the network through a communication interface in the compute device. In this possible implementation, a memory 1604 in the compute device 1600A stores instructions for performing a function of the display unit 1501. In addition, a memory 1604 in the compute device 1600B stores instructions for performing functions of the transceiver unit 1502 and the processing unit 1503.

A connection manner of the compute device cluster shown in FIG. 18 may be considered based on the data processing method for an agent provided in this application, and a display operation and an operation other than the display operation are separately performed. In other words, it is considered that the function of the display unit 1501 is performed by the compute device 1600A, and the functions of the transceiver unit 1502 and the processing unit 1503 are performed by the compute device 1600B.

It should be understood that functions of the compute device 1600A shown in FIG. 18 may also be completed by a plurality of compute devices 1600. Similarly, functions of the compute device 1600B may also be completed by a plurality of compute devices 1600.

An embodiment of this application further provides another compute device cluster. For a connection relationship between compute devices in the compute device cluster, refer to the connection manners of the compute device clusters in FIG. 17 and FIG. 18 similarly. Details are not described herein again.

An embodiment of this application further provides a computer program product including instructions. The computer program product may be software or a program product that includes instructions and that can run on a compute device or can be stored in any usable medium. When the computer program product runs on at least one computer device, the at least one computer device is caused to perform the data processing method for an agent.

An embodiment of this application further provides a computer-readable storage medium. The computer-readable storage medium may be any usable medium accessible by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the data processing method for an agent.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. An information processing method for an agent, wherein the method is applied to a cloud platform, the cloud platform runs an agent system, the agent system comprises a plurality of agents, and the method comprises:
displaying a session interface, wherein the session interface comprises an input field;
obtaining a first instruction in response to a first input operation on the input field, wherein a language of the first instruction is a natural language; and
displaying, on the session interface, first response information returned by a first agent, wherein the first response information is for the first instruction, and the first agent is determined based on the first instruction.

2. The method according to claim 1, wherein the first agent is a real embodied agent; and
if an execution body comprised in the first instruction is the first agent, and an event comprised in the first instruction matches a function of the first agent, the first response information comprises a status of the first agent and/or an event status corresponding to the first instruction.

3. The method according to claim 1, wherein the first agent is a real embodied agent; and
if an execution body comprised in the first instruction is the first agent, and an event comprised in the first instruction does not match a function of the first agent, the first response information comprises:
invocation information for a second agent, wherein the second agent is a real embodied agent, and a function of the second agent matches the event, or the second agent is a first artificial intelligence AI agent, and the first AI agent is configured to manage the agent system.

4. The method according to claim 3, wherein after displaying, on the session interface, the first response information returned by the first agent, the method further comprises:
displaying, on the session interface, second response information returned by the second agent, wherein the second response information is for the first instruction.

5. The method according to claim 1, wherein if the first instruction does not comprise an execution body, the first agent is a first AI agent, and the first response information comprises:
invocation information for a third agent, wherein a function of the third agent matches an event comprised in the first instruction.

6. The method according to any one of claims 1 to 5, wherein the method further comprises:
obtaining a second instruction in response to a second input operation on the input field, wherein the second instruction instructs to display a data stream of a target event, the target event is an event that has been executed or is being executed by the agent system, and a language of the second instruction is a natural language; and
displaying the data stream of the target event.

7. The method according to claim 6, wherein before displaying the data stream of the target event, the method further comprises:
displaying third response information on the session interface, wherein the third response information is for the second instruction; and
displaying the data stream of the target event comprises:
displaying the data stream of the target event in response to a touch operation on the third response information.

8. The method according to claim 6 or 7, wherein displaying the data stream of the target event comprises:
displaying the data stream of the target event on the session interface, or displaying the data stream of the target event on an interface other than the session interface.

9. The method according to any one of claims 6 to 8, wherein the data stream of the target event comprises a real-time data stream of the target event, a historical data stream of the target event, a first-person perspective data stream of the target event, or a third-person perspective data stream of the target event; and
the first-person perspective is a perspective of an agent that executes the target event, and the third-person perspective is a perspective of the agent system.

10. The method according to any one of claims 1 to 9, wherein the method further comprises:
obtaining a third instruction in response to a third input operation on the input field, wherein a language of the third instruction is a natural language, and the third instruction instructs to construct a target simulation environment; and
displaying the target simulation environment on a simulation interface based on the third instruction.

11. The method according to claim 10, wherein the method further comprises:
obtaining a fourth instruction in response to a fourth input operation on the input field, wherein a language of the fourth instruction is a natural language, and the fourth instruction instructs to generate data of a target type; and
displaying a fourth response message on the session interface based on the fourth instruction, wherein the fourth response message indicates the data of the target type.

12. The method according to claim 10 or 11, wherein the method further comprises:
obtaining a fifth instruction in response to a fifth input operation on the input field, wherein a language of the fifth instruction is a natural language, and an event comprised in the fifth instruction matches a function of a virtual embodied agent; and
displaying fourth response information returned by the virtual embodied agent on the session interface, wherein the fourth response information comprises a status of the virtual embodied agent and/or an event status corresponding to the fourth instruction.

13. The method according to any one of claims 1 to 12, wherein the method further comprises:
obtaining a sixth instruction in response to a sixth input operation on the input field, wherein a language of the sixth instruction is a natural language, and the sixth instruction instructs to generate skill code of a fourth agent; and
displaying the skill code of the fourth agent on a code interface based on the sixth instruction.

14. The method according to claim 13, wherein the method further comprises:
testing the skill code of the fourth embodied agent; and
displaying a test result of the skill code of the fourth embodied agent.

15. An information processing apparatus for an agent, comprising a module configured to perform the method according to any one of claims 1 to 14.

16. A computer device cluster, comprising at least one compute device, wherein each compute device comprises a processor and a memory; and
the processor of the at least one compute device is configured to execute instructions stored in the memory of the at least one compute device, to cause the compute device cluster to perform the method according to any one of claims 1 to 14.

17. A computer-readable storage medium, wherein the computer-readable storage medium comprises computer program instructions, and when the computer program instructions are run by a compute device cluster, the compute device cluster is caused to perform the method according to any one of claims 1 to 14.

18. A computer program product comprising instructions, wherein when the instructions are run by a computer device cluster, the computer device cluster is caused to perform the method according to any one of claims 1 to 14.
